# EUROPEAN PATENT SPECIFICATION

(11) **EP 4 309 501 B1**
(45) Date of publication and mention of the grant of the patent: **15.07.2026**
(21) Application number: 22771843.4
(22) Date of filing: 10.03.2022
(51) Int. Cl.: A21B 1/00, A21B 3/00, A21B 5/02, A21B 1/48, A21C 5/00

(54) **DEVICE FOR PREPARING PASTRY GOODS (EMBODIMENTS)**
VORRICHTUNG ZUR HERSTELLUNG VON GEBÄCKWAREN (AUSFÜHRUNGSFORMEN)
DISPOSITIF DE PRODUCTION D'ARTICLES DE CONFISERIE

(30) Priority: 16.03.2021 RU 2021106975
(43) Date of publication of application: 24.01.2024
(73) Proprietor: Sorokin, Mikhail Vitalevich, Volgograd, 400005 (RU)
(72) Inventor: Sorokin, Mikhail Vitalevich, Volgograd, 400005 (RU)
(74) Representative: Sloboshanin, Sergej
(86) International application number: PCT/RU2022/000069
(87) International publication number: WO 2022/197210

(56) References cited:
- WO-A1-02/090081
- WO-A2-2009/100873
- CA-A1- 2 464 859
- JP-B2- 5 121 918
- JP-B2- 5 140 743
- JP-B2- 5 961 527
- RU-C2- 2 504 155
- RU-C2- 2 565 269
- RU-C2- 2 565 269
- RU-U1- 115 623
- US-A1- 2006 016 797

## Description

### PASTRY-MAKING MACHINE (OPTIONS)

The invention relates to machines for the food industry and can be used for producing confectionery shaped as tartlets, patty shells, waffles or walnut-shaped cookies.

Russian Federation Patent No. 115623 is known for the utility model "Pastry making machine", IPC A21B 5/02, published on May 10, 2012. The patent discloses a pastry-making machine comprising an automatic dispenser and an oven with an inwardly-positioned mold-equipped belt conveyor, which is connected to a support frame by means of driving and following pulleys. An automatic dispenser is mounted on a support and contains a loading hopper, a feeding screw, and a dosing head; the hopper is equipped with a feeding screw. Molds made of food-grade metal sheets are installed on a module comprising a punch and a die. The molds may be covered with an anti-stick surface and have a geometric shape of pastry products, which is achieved by keeping the molds closed with a lock throughout the baking process. The coupling and decoupling of the die with / from the punch during the movement of the belt with the molds are carried out by coupling / decoupling devices. The automatic dispenser is synchronized with the movement of the belt via a position sensor, which ensures the precise positioning of the dough pieces into the open molds through a loading device. For smooth removal of finished products from the mold, an unloader is provided, ensuring transportation of the products outside the oven. The machine can operate in an automatic mode using electronic control methods for rotating the belt and dispenser screws, and maintaining the temperature at a given level. Its control panel has a minimum number of adjustable parameters - baking time and dough piece size, which in turn is sufficient for selecting a mode in case of changing dough parameters.

Among the design drawbacks of said pastry-making machine, large temperature inertia should be noted; i.e., long pre-heating and long cooling of the machine. Complex design of forming devices mounted on a module comprising a punch and a die. Forms subject to intense heating during baking are in contact with friction elements. In addition, inside the oven, the conveyor belt is constantly in a hot state, while the high temperature of metal parts and components does not allow the use of lubricant in friction areas, which indicates a low service life of the conveyor. Opening of the molds and turning them over does not always ensure that the product falls out of the mold, especially if the product has a complex configuration. The description of the machine design does not indicate how the excess melted fat that occurs during baking the dough is collected. Fat ingress damages the heating elements and affects the reliability of the machine.

The known baking machine (patent RU # 2504155 IPC A21B 1/48, published on January 20, 2014) contains a loading station, a baking chamber, and an unloading station. In addition, the machine comprises metal plates with molds located on a path leading through the baking chamber, and a conveyor device for them. The metal plates with the molds are designed as current-collecting plates, heated in a non-contact inductive manner. The baking chamber is equipped with an induction heater. It contains at least one oblong inductor, which is located parallel to the path of the metal plates and runs along the path of several current-collecting plates. The oblong inductor creates a large-area magnetic field which heats the metal current-collecting plates simultaneously via non-contact induction.

The drawback of said baking machine is the inefficient use of the electromagnetic field created around the inductors and the unsafe induction heating circuit with open emitters. High-voltage emitters are not protected in any way from dripping excess fat generated during baking confectionery products. Not only the lower part of the plate with the molds is subjected to heating, but also all nearby (within 10 cm) metal parts - wheels, fasteners, chain, guide rails, supports, inductors. Despite the fact that part of the inductive radiation is attracted to the plates, the rest of it is scattered across neighboring elements that are not involved in the baking process. The description of said baking machine does not clarify how the issue of heating the inductor as a result of self-induction is resolved. The drawings illustrating said baking machine show the types of the inductor, which obviously can be a wire, cable or tube. At the same time, large distances between the turns (rods) laid on special supports indicate that this machine uses air-cooled emitters that demonstrate low efficiency.

Known Russian Federation Patent No. 2565269, IPC A21B 5/02, published on October 10, 2015, discloses options of a dough dispenser and a pastry-making machine (prototype). A pastry-making machine in one of the embodiments contains a dough dispenser, a support frame, a transporting line in the form of a chain conveyor, an oven for baking products and a finished product unloader. In turn, the dough dispenser comprises a support, a loading hopper, a blower, a dosing head and a device for discharging dosed dough pieces. In this case, the loading hopper and the blower are structurally combined with the body of the dosing head, and the blower is designed as rolls forming a kinematic pair, in which each of the rolls is installed with a gap relative to the surface of the dosing head. The cylindrical surfaces of the blower rolls are profiled by dividing cells, which are located at a distance from each other to form longitudinal and transversal rows on the surfaces of the rolls. Similar to the longitudinal rows of the dividing cells of the blower rolls, the dividing chambers are arranged in a row on the surface of the dosing head. In general, the blower rollers are arranged to overlap the cavities of the dividing chambers on both sides. In this case, the device for discharging dosed dough pieces, fixed in the lower part of the dispenser, is equipped with a forming plate with calibration channels combined with the dividing chambers of the dosing head, and cutting plates installed with the capability of reciprocating movement relative to each other to cut off dosed dough pieces. The conveyor is equipped with carts for dies, each of the carts is made in the form of a solid base, on which a die with molds is installed on top, and the front and rear axles with wheels are fixed underneath the base. The carts are attached to the chain conveyor with the ends of their front axles and are installed so that they can be tipped over. The oven for baking products is an open conveyor oven, which is equipped with forming dies moving along the conveyor and with punches which are installed above the dies and capable of upward and downward vertical movement and which are stationary in relation to the support frame of the conveyor. The dies with the molds installed on the conveyor and the punches above the dies are equipped with heating elements, and the conveyor support frame is attached to a support bar which is located along the conveyor and on which current-carrying profiles isolated from each other are installed on the top and bottom. In this case, the heating element of each die is equipped with a current-collecting contact connected to a respective current-carrying profile. Each punch is equipped with an individual pneumatic drive and can be mounted either on the cylinder rod of the pneumatic drive or on a rocker arm connected to the cylinder rod. In this case, the pneumatic drives for the punches are installed on support posts connected to the conveyor support frame. The finished product unloader is equipped with a cart-tipping limiter in the form of a console and mounted on the conveyor support frame. The pastry-making machine is equipped with an automatic control unit with sensors connecting it to the dispenser, the chain conveyor drive, the pneumatic drives of the punches, the heating elements of the dies and the punches, while the stroke of the dispenser carriage is adjusted in accordance with the location of the molds on the dies and each of the dies.

The known pastry-baking machine comprises an electrically-heated open conveyor oven. In this regard, a bar is attached to the support frame of the conveyor, on which the current-carrying profiles isolated from each other are installed on the top and bottom. The current-collecting contact of the heating element of each die moved by the conveyor is connected to the respective current-carrying profile. According to the design, each punch, which is mounted on the support stand attached to the conveyor's support frame, moves downwards to the heated die via its individual pneumatic drive during the operation of the conveyor oven. If the dies and punches are equipped with heating elements in the form of a spiral or resistance elements, heating the oven is a time-consuming process which is accompanied by heat losses, since the thermal parameters of the oven of the known machine significantly exceed the temperature regime required for baking products (-180°). For instance, the dissipation of thermal energy occurs during the process of heating the bases of the carts, on which the dies with the molds are fixed. The bases of the carts must be heated to a temperature of more than 300°, since a die heating element is positioned underneath the base of every cart, and the die is heated by the cart base as by an electric plate. To bake products, the molds on the dies must be greased with fat, and when the punches couple with the heated dies, the fat may not only flow onto the surface of the dies, but also get beyond it. The contact of hot fat with the sliding current-collecting contacts of the heating elements of the dies may lead to sparks and even a fire in the oven. Other drawbacks of that machine include friction wear of its mechanical parts. E.g., uneven wear of the roll surface may happen in the dispenser. Also, its carts with the dies that are wheeled along the conveyor and its rocker arms with the punches moving up and down, etc. are subject to wear. A large number of mobile mechanical parts, design complexity, and size parameters can add to the list.

The invention is a pastry-making machine according to claim 1 or claim 8.

The objective of the invention group is to create a pastry-making machine that provides increased reliability and efficiency while reducing operational consumption parameters and ensuring high quality products.

The above specified technical result is achieved in a pastry-making machine (option 1), which contains a dough dispenser mounted on a frame capable of reciprocal movement; a transporter installed on a support frame and designed as a chain conveyor with molds arranged in longitudinal rows on dies; punches made in accordance with the rows of the molds on the dies, an open conveyor oven for baking; a finished product unloader, and a control unit connected via sensors to the dispenser and conveyor drive. In this case, in the dispenser, the loading hopper is combined with the dosing head case; the blower is made in the form of rolls forming at least one kinematic pair, the surfaces of which are profiled with dividing cells spaced from each other and forming longitudinal and transversal rows. In accordance with these rows, on the surface of the dosing head there are rows of dividing chambers joined with channels for discharging dough pieces. The conveyor-placed dies and the punches that are installed in the open oven zone and capable of vertical movement and coupling/decoupling with / from the dies are equipped with heating units located above and underneath the conveyor, respectively, and connected to a control unit. In this case, every die is mounted on a solid base of a wheeled cart attached to the chain conveyor with the ends of its frontal axle for tipping the cart over and unloading the finished product on exit from the oven. According to the invention design, said machine has one heating unit located in the oven underneath the conveyor; the unit is stretched along the oven and supported by brackets. Inside the heating unit, an inductive element (coil) with turns elongated in a horizontal plane is located longitudinally, and the inductive element is equipped with a water cooling system and is insulated with a dielectric. Π-shaped stands with their vertical elements fixed to the sides of the conveyor support frame are installed above the conveyor in the oven zone. On top of the crossbars of the Π-shaped stands, there are guide rails with a platform, a load-bearing beam oriented along the conveyor, and a current-carrying profile. In this case, a manipulator is fixed on the platform which is installed with the capability of reciprocating movement along the guide rails equipped, on their outer sides, with flexible pipes of toothed-belt transmissions; the manipulator is equipped with a lifting mechanism and magnetic or mechanical grips for the punches. Each punch has a pressure roll installed on the bracket to rest on the load-bearing beam and is equipped with a current-collecting spring contact for connecting the heating unit to the current-carrying profile; the automatic control unit is coordinated with the cycle of manipulator movements.

One specific embodiment of option 1 has an inductive element (the coil) equipped with a cooling system consisting of upper and lower contours; in each contour, the cooling tube is positioned in turns similar to the inductive element.

Another specific embodiment of option 1 has an inductive element of the heating unit, which is made of a metal tube that forms, inside the inner space, a circuit of the inductive element cooling system.

The specified technical result is also achieved in a pastry-making machine (option 2), which comprises a dough dispenser mounted on a frame with the capability of reciprocating movement, a transporter mounted on a support frame and designed as a chain conveyor with product molds, punches positioned in accordance with the rows of the molds on dies, an open conveyor oven for baking, a finished product unloader, and a control unit connected by sensors to the dispenser and conveyor drive. Meanwhile, the hopper of the dispenser is joined with the dosing head case; the blower consists of rolls forming at least one kinematic pair, with their surface profiled with separating cells spaced from each other and forming longitudinal and transversal rows. In accordance with these rows, the dosing head surface has rows of dividing chambers joined with the channels for discharging dosed dough pieces. The dies on the conveyor and the punches installed in the open oven zone and being capable of vertical movement for coupling/decoupling with / from the dies, are equipped with heating units located above and underneath the conveyor, respectively, and connected to the control unit. Each die is mounted on the solid base of a wheeled cart attached to the chain conveyor with the ends of its frontal axle for tipping the cart over and unloading the finished product on exit from the oven. In accordance with the invention design of said pastry-making machine, the heating units of the oven - one located above the conveyor and the other installed on brackets under the conveyor - are designed as units stretched along the entire oven. Inside each unit is an inductive element (coil) with turns elongated in a horizontal plane, while the inductive element is equipped with a water cooling system and is insulated with a dielectric. Π-shaped stands are installed above the conveyor in the oven zone; the vertical elements of the Π-shaped stands are fixed to the sides of the conveyor support frame. On the crossbars of the Π-shaped stands, there are guide rails with a platform, load-bearing beams oriented along the conveyor, and an induction unit fixed between the beams. At the same time, the platform, which is installed with the capability of reciprocating movement along the guide rails equipped, on the outer sides, with flexible pipes of toothed-belt transmissions, is attached onto a manipulator equipped with a lifting mechanism and magnetic or mechanical grips for the punches. Each punch is equipped with pressure rolls mounted on brackets to rest on load-bearing beams, and the automatic control unit is coordinated with the cycle of manipulator movements.

Moreover, in one specific embodiment (option 2), the inductive element (coil) of any heating unit of the oven is equipped with a cooling system comprising upper and lower circuits; and in each circuit, a cooling tube is located in turns and similar to the inductive element.

In addition, in another specific embodiment (option 2), the inductive element of any heating unit of the oven is made of a metal tube that forms, inside the inner space, a circuit of the cooling system of the inductive element.

Moreover, in some specific embodiments of options 1 and 2, the dispenser, in which each kinematic pairs of the blower rolls is equipped with an independent drive, is installed on the conveyor support frame; and the guide rails for moving the carriage with the dispenser are fixed on the support frame.

In addition, in other specific embodiments of options 1 and 2, each cart with dies installed along the conveyor as it goes has a base with Γ-shaped bent sides at the front and rear; and under the bent part of the front side of the base is a fixed axle with wheels.

In addition, in one more (fifth) embodiment of options 1 and 2, the machine can be equipped with a finished product turner and an excess remover installed in front of the unloader.

A comparative analysis with the prototype shows that the claimed machine - the embodiments of option 1 and option 2 - has distinctions from the known prototype consisting in that the machine is made with an open induction conveyor oven, and the punches are installed with the capability of moving horizontally related to the dies. In this case, the molds in the oven are heated in a contact-free manner by high-frequency current without any sliding contacts, thus eliminating the possibility of sparking that, when dealing with heated fat, may lead to inflammation of the oven. The high-frequency electromagnetic field (with a frequency from 20 to 100 kHz) created by the induction coil (inductor) acts most effectively at a 15 (+/-5) mm distance. If the inductor is made in the form of a unit stretched along the entire length of the oven and has a dielectrically-isolated inductive element (coil) with turns elongated in the horizontal plane of the unit and with a water cooling system, this allows for local heating of the molds on the dies, prevents unnecessary losses of thermal energy and reduces electricity consumption. In the heating unit, the turns of the inductive element are as close to each other as possible, but during the radiation process, due to the occurrence of self-induction, the possibility of overheating of the inductive element arises, leading to bending deformation in the heating unit. To remove heat and prevent unit from deformation thereupon, a water cooling system is designed for the heating element (coil). Moreover, due to changes in the movements of the punches, the design of the oven and entire machine in general has been simplified. Unlike the prototype, the claimed machine does not have rocker arms on which punches laced with pneumatic drives are attached; a manipulator replaced the rocker arms. The manipulator with its fairly simple and compact design solution allows the punches to move vertically and horizontally related to the dies on the conveyor. This ensures simplicity for the machine design, makes it compact, and achieves the effect of "manual baking" with one-time closing of the molds as compared to the fact that in the prototype the punches are coupled / decoupled with / from the dies on the conveyor 9 times during the baking process. The reliability of the machine during operation is ensured by excluding from the design such machine parts as rocker arms, cartwheel pairs, sliding contacts that are subject to friction and wear during movement. The automatic control unit connected to the dispenser, chain conveyor drive and heating units of the dies and punches is coordinated with the cycle of manipulator movements.

A distinctive feature of one of the embodiments (options 1 and 2) is that deformation of any heating unit can be prevented by providing an external cooling system consisting of upper and lower circuits relative to the induction element wire. It is important that in each circuit the cooling tube is arranged in turns similar to the inductive element.

Also, a distinctive feature of another embodiment (options 1 and 2) is that deformation of any heating unit can be prevented by equipping the inductive element with an internal cooling system. It is significant that in any heating unit of the oven the inductive element (coil) must be made of a metal tube forming, inside the inner space, the circuit of the inductive element cooling system.

In addition, specific embodiments (option 1 and 2) have the following differences from the prototype.

The distinction is that the guide rails for moving the carriage with the dough dispenser are mounted on the conveyor support frame, which makes it possible to reduce the dimensions of the machine. Like the prototype, the dispenser has the same components and can be made with either a two-roll or four-roll blower, depending on the type of product. At the same time, the prototype provides one drive for connecting the blower with one or two kinematic pairs of rolls. However, the dependent drive of the blower with two kinematic pairs can cause uneven wear of the roll surfaces, which necessitates the need to replace an expensive roll with a worn surface. The distinction of the claimed technical solution is that each kinematic pair formed by the blower rolls is connected independently of the other kinematic pair. Connecting the kinematic pairs of the blower rolls to independent drives ensures uniform wear of the roll surfaces; if this occurs, the dough dosage can be simply increased to ensure the quality of the finished products. In the prototype, the dispenser is placed on a separate mobile frame; the inertia of the mobile frame affects the performance of the machine due to the large weight of the dispenser. When the dispenser is mounted on a fairly massive conveyor support frame, the lack of inertia allows the dispenser to move faster. Placing the dispenser on the support frame also helps to simplify the design and dimensions of the machine.

When each cart with its base-mounted die has Γ-shaped bent edges in the front and the back and has one-wheeled axle installed underneath the bent frontal part, the following advantage is achieved: - the cart design is lightweight and allows reducing inertness when tipping the cart over and shaking it; and this in turn prevents the treaded fasteners of the aluminum dies from breaking. Reducing the number of such design components as parts of the axles with wheels makes it possible to install the carts along the conveyor as it goes in an order in which a bent portion of a back part of a preceding cart rests on a bent portion of a front part of a succeeding cart, thus making the machine more compact by shortening the linear distance between the axes.

In case a finished product turner and an excess remover are installed in front of the unloader, the turner slightly opens each punch above each die from one side, then from the other. The turner allows for interacting with baked products located in the molds without violating the integrity of their internal cavity in the process of releasing from the punches. In addition, since during dough piece formation there may be excess dough that extends beyond the edges of the molds on the dies, the excess remover allows the calibration of each baked product by means of trimming the excess that extends beyond the edges of already baked products.

Embodiments of the invention is illustrated by graphic materials; drawings and photographs are presented.

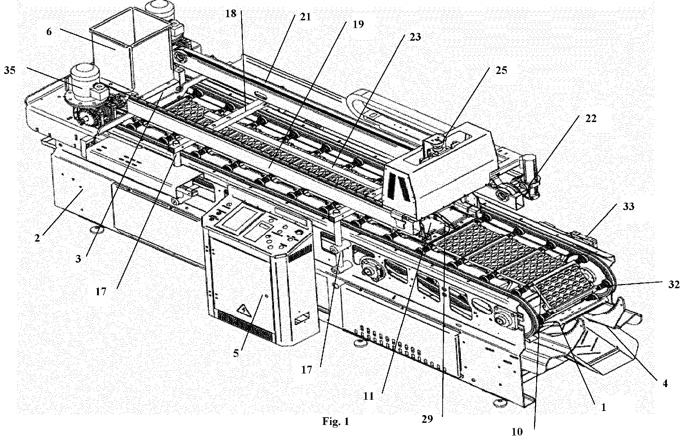

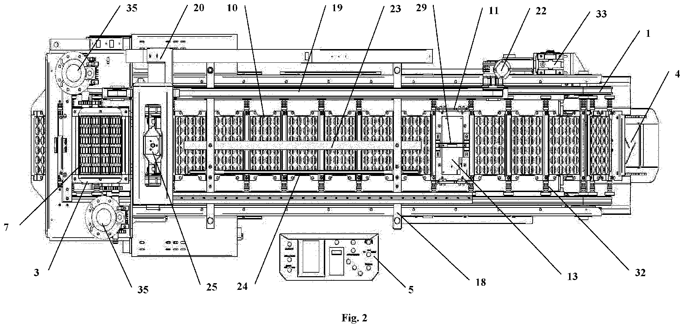

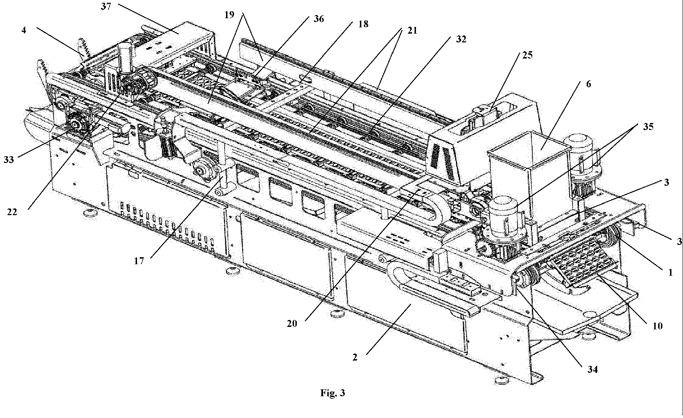

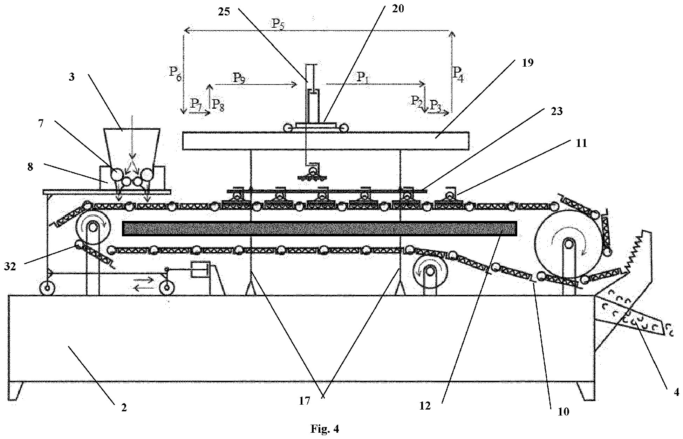

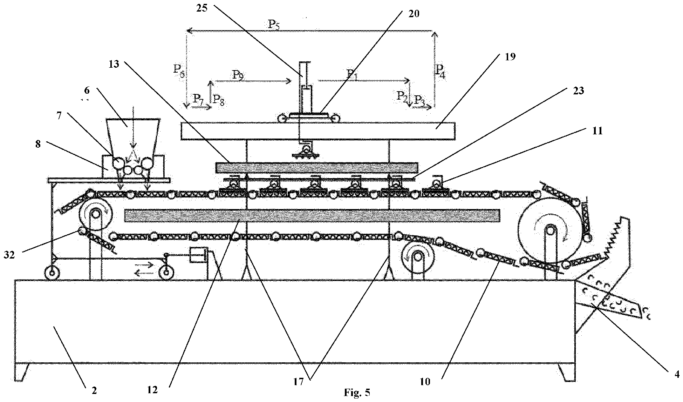

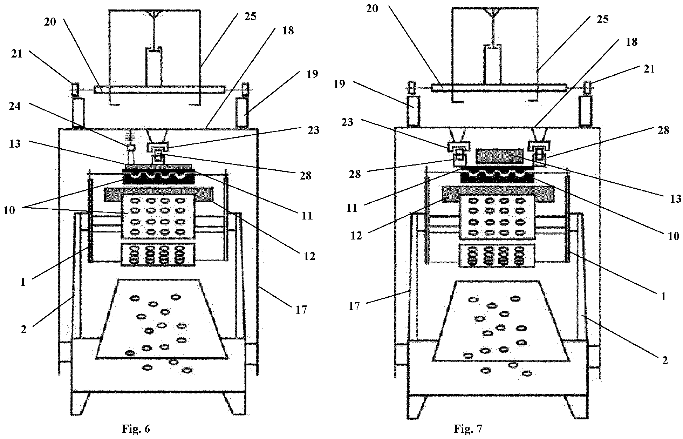

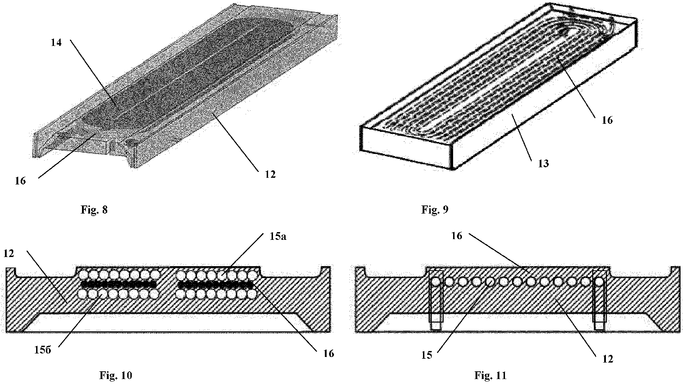

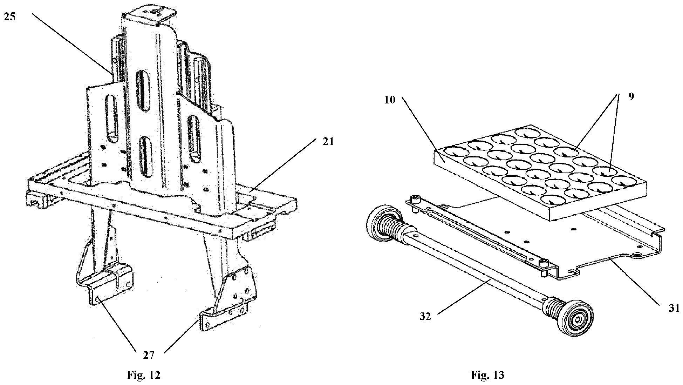

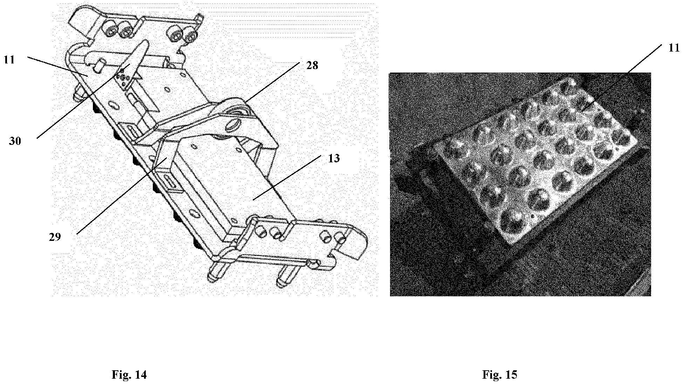

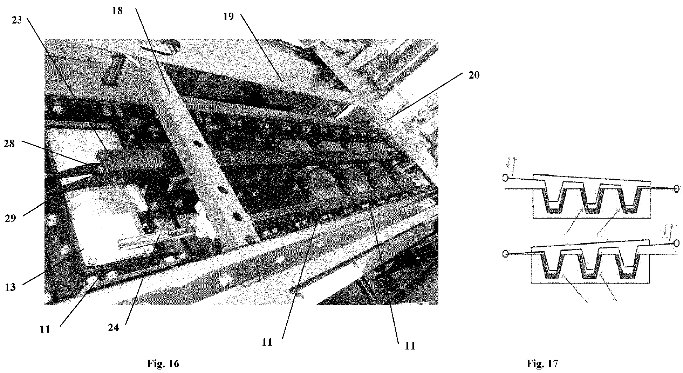

Figure 1 demonstrates the pastry-making machine from the control unit side; Fig. 2 - top view; Fig. 3 - the same, from the turner's side; Fig. 4 - the machine with one heating unit, a scheme; Fig. 5 - the same, with two heating units; Fig. 6 - same as Fig. 4, back view; Fig. 7 - same as Fig. 5, back view; Fig. 8 - the heating unit for the dies; Fig. 9 - the heating unit for the punches; Fig. 10 - the heating unit with the two-circuit coil cooling system; Fig. 11 - the same, with the one-circuit cooling system; Fig. 12 - the manipulator, general view; Fig. 13 - the cart with the die, disassembled; Fig. 14 - the punch with the pressure roll above; Fig. 15 - the punch, bottom view; Fig. 16 - the oven with the current-carrying profile; Fig. 17 - the operating layout of the turner.

In its general case, the embodiment (e.g., option 1) comprises a conveyor in the form of a chain conveyor 1 mounted on a support frame 2, an open conveyor oven for baking products formed by using a dough dispenser 3, a finished product unloader 4 and a control unit 5. The dough dispenser 3 is installed at the beginning of the conveyor 1 with the capability of reciprocating movement and contains a loading hopper 6, a blower in the form of rolls 7 (Fig. 4, 5), a dosing head 8 equipped with a device for discharging dosed dough pieces. In this case, the surfaces of the rolls 7 forming at least one kinematic pair are profiled with dividing cells spaced from each other to create 7 longitudinal and transversal rows on the rolls. Respective to these rows, rows of dividing chambers are located on the surface of the dosing head 8. Depending on the configuration of the products being produced, molds 9 are installed on the conveyor 1; the molds are arranged in longitudinal rows on dies 10. The number of the rows of the molds 9 on the dies 10 depends on both the pastry product configuration and size. Smaller products require more rows on each die 10 than bigger products do. In this case, the dispenser 3 is equipped with a blower with four rolls forming two kinematic pairs. Respective the rows of the molds 9, punches 11 are made on the dies 10. The dies 10 and punches 11 are equipped with heating units 12 and 13, respectively. The unit 12 intended for heating the dies is located underneath the conveyor 1 and is designed as a unit stretched along the entire oven and being mounted on brackets. In this case, inside the heating unit 12 is an inductive element 16 (coil) with turns elongated in the horizontal plane of the unit 12; the inductive element 16 is isolated with a dielectric 14 and equipped with a water cooling system 15. In this case, in the oven zone above the conveyor 1 there are Π-shaped stands with vertical elements 17 equipped with crossbars 18; the vertical elements 17 are fixed to the support frame 2 on the sides of the conveyor 1. Guide rails 19 with a platform 20 installed on top of the crossbars 18 are located on the Π-shaped stand. One of the guide rails 19 is equipped, on its outer side, with a flexible pipe of a toothed-belt transmission 21, with bearings, and with a drive 22. A load-bearing beam 23 and a current-carrying profile 24 are oriented along the conveyor 1 by means of Π-shaped stands and are fixed to the underside of the crossbars 18. The platform 20 is installed with the capability of reciprocating movement along the guide rails 19. In this case, a manipulator 25 is fixed to the platform 20 and equipped with a lifting mechanism 26 and magnetic or mechanical grips 27 for the punches 11. Each punches 11 (Fig. 14) is equipped with a pressure roll 28 mounted on a bracket 29 to rest on the load-bearing beam 23 and has a current-collecting spring contact 30 for connecting the heating unit 13 to the current-carrying profile 24. The dies 10 are made of aluminum and mounted on wheeled carts. In this case, each die 10 is mounted on a steel base 31 of the cart attached with the ends of a front wheel axle 32 to the chain conveyor 1 for tipping over and unloading finished products from the oven (Fig. 13). The automatic control unit 5 is connected to the dispenser 3, the drive 33 of the conveyor 1 and the heating units 12 and 13, respectively, of the dies 10 and punches 11 via sensors; and the unit 5 is adjusted in accordance with the position of the product molds 9 on the dies 10 and coordinated with the movement cycle of the manipulator 25.

In the general case, the embodiment (option 2) contains the same structural components as the embodiment (option 1). One distinction is that the machine does not have a current-carrying profile 24 and the punches 11 are heated by one and the same heating unit 13, which is located above the conveyor 1 and is made, similar to the heating device 12, in the form of a unit stretched along the oven (Fig. 5, 7). Inside the heating block 13 is an inductive element (coil) 16 with turns elongated in the horizontal plane of the unit 13; the coil 16 is isolated with a dielectric 14 and equipped with a water-cooling system 15. Another distinction is that, two load-bearing beams 23 are oriented along the conveyor 1 by means of Π-shaped stands and fixed to the underside of the crossbars 18, and the induction heating unit 13 is located between the load-bearing beams 23. In this case, each punch 11 is equipped with two pressure rolls 28 to rest on the load-bearing beams 23, and each roll 28 is mounted on a corresponding bracket 29 (Fig. 7).

In the first specific embodiment (options 1 and 2), the machine has the same structural components as the embodiment in the general case. The only distinction is that the water-cooling system 15 of the wire of the coil 16 contains upper and lower circuits with cooling tubes 15a, 15b, respectively, laid in coiled turns similar to the wire of the inductive element 16 (Fig. 10).

In the second specific embodiment, the water-cooling system 15 in the heating unit 12 (option 1) and in the heating units 12 and 13 (option 2) can be single-circuit (Fig. 11). In this case, the inductive element (coil) 16 of the heating unit 12 or of the heating units 12 and 13 is made in the form of a metal tube creating, inside the inner space, the circuit of the cooling system 15 for the inductive element 16.

In the third specific embodiment (option 1 and 2), the pastry-making machine comprises the same structural components as the embodiment in the general case. The only distinction is that the support frame 2 of the conveyor 1 is attached to the guide rails 34 for moving carriages with the dough dispenser 3, in which any kinematic pair formed by the rolls 7 is connected independently of the other kinematic pair by using drives 35 (Fig. 1-3). The dispenser 3 mounted on the support frame 2 has an additional degree of freedom, which makes it possible to regulate the height of the dough relative to the dies 10.

In the fourth specific embodiment (option 1 and 2), the pastry-making machine comprises the same structural components as the embodiment in the general case. The only distinction is that each aluminum die 10 is installed on a cart with a steel base 31 made with Γ-shaped bent sides at the front and rear; and under the bent part of the front side of the base is a wheeled axle 32 (Fig. 13). In this case, the carts are installed along the conveyor 1 as it goes in an order in which a bent portion of a back part of a preceding cart rests on a bent portion of a front part of a succeeding cart, under which the axle 32 with wheels is fixed.

In the fifth specific embodiment (option 1 and 2), the pastry-making machine comprises the same structural components as the embodiment in the general case. The only distinction is that of the machine is equipped with a finished product turner 36 and an excess remover 37, both sequentially located in front of the unloader 4 and installed on the support frame 2 of the conveyor 1 (Fig. 3).

The pastry-making machine in the general case (e.g., option 1) has the following operating principle: first, the oven is launched before the dosed dough pieces are put into the molds 9 on the dies 10 (Fig. 13). The drive 33 of the conveyor 1 is switched on; once the grounding circuit is checked, water is supplied to the cooled circuits 15a, 15b of the unit 12. When the oven is launched, the dies 10 and the punches 11 are heated to the preset temperature via the inductive element 16 of the heating unit 12 and via the electric heating units 13, respectively. Voltage is supplied to the heaters 13 of the punches 11 via the current-collecting contacts 30 connected to the respective current-carrying profile 24 (Fig. 16). Simultaneously, dough is loaded to the hopper 6 of the dispenser 3. In the manual mode, it is necessary to check the dough evenness and stability of its discharge through the separating chambers of the dosing head 8 equipped with the device for discharging dosed dough pieces. An idle cycle of coupling / decoupling the punches 11 with / from the dies 10 is run using the manipulator 25. When the temperature of the dies 10 and the punches 11 reaches 160-180°C, a sample batch is baked; depending on the sampling results, the baking temperature and dough dosage are adjusted. After those oven launching operations are complete, dough pieces are prepared in the dispenser 3. The pieces of dough are measured in the dividing chambers, cut off from the dispenser 3 and put into the molds 9; the conveyor does not move. During the process of filling the molds 9 in, only the carriage with the dispenser 3 moves; its movement depends on the number of rows on the die 10. E.g., if the die 10 has three rows, the carriage with the dispenser 3 makes three movements. The dispenser 3, for which one kinematic pair of rolls 7 suffices, successively fills in the first row of the molds 9, then the second and the third rows. If the die 10 has four rows of the molds 9, the molds are filled in with the dispenser 3 that has four rolls 7 forming two kinematic pairs. The molds 9 are filled in by the rows located on two adjacent dies 10 placed under the dispenser 3. In this case, only one half of the first die, if it has more than three rows of the molds, is filled in with the dough, i.e., the dough is put only into the last two rows of the molds. At the same time, the dough is put into the 3^{rd} row of the molds 9 of the first die 10 standing under the dispenser 3, and into the 1^{st} row of the molds 9 of the second die 10. As the carriage with the dispenser 3 moves one step, the fourth row of the molds 9 on the first die 10 standing under the dispenser and the second row of the molds 9 on the second die 10 are filled in simultaneously. Then the dough molding by the dispenser 3 is stopped by means of the control unit 5; and moved by the conveyor 1, the half-loaded die 10 steps towards the oven and stops. As the half-loaded die 10 moves towards the oven, the dispenser 3 does not move and does not discharge the dough. When the oven starts working, the conveyor 1 does not move, and the manipulator 25 via the platform 20 and the guide rails 19 - one of the rails 19 is equipped with the pipe of the toothed-belt transmission 21 with the drive 22 - makes the process step P₁ (Fig. 4) for decoupling the punch 11 from the die 10 that has left the baking area. Via the lifting mechanism 26 of the manipulator 25, the grippers 27 move downwards to the punch 11 on the die 10 (process step P₂, Fig. 4), the punch 11 is decoupled from the die 10 (process step P₃). Then, the manipulator 25, lifting the punch 11 at the process step P₄, transports it along the conveyor 1 in the direction of the dispenser 3 towards the opening of the oven (process step P₅). The grippers 27, holding the punch11 (process step P₆), move downwards, and the punch 11 is installed on the dough-filled die 10 that has moved from under the dispenser 3. Closing the die 10, the punch 11 forms dough pieces positioned in the molds 9 on the dies into a finished product shape. The conveyor 1 is switched on by a gear motor 33, thus transporting the molds 9 on the die 10 covered by the punch 11 to the oven. In this case, the punch 11 is pressed against the die 10 by the grippers 27 of the manipulator 25, preventing the punch 11 from opening as the dough rises. The manipulator 25, holding the punch against the die with the grippers 27, takes the stationary position, and process step P₇ is made when the conveyor 1 with the dies 10 on moves one step. As the conveyor 1 moves one step (process step P₇, Fig. 4), the manipulator 25 keeps its stationary position until the moment when the roll 28 on the punch 11 is positioned underneath the bear-loading beam 23 fixed onto the crossbars 18 of the Π-shaped stands of the conveyor 1. Once the conveyor 1 completes its step, it stops; the lifting mechanism 26 of the manipulator 25 switches on, the grippers 27 stop holding the punch 11 as they make the process step P₈ upward. The punch 11 is now pressed to the die 10 by the pressure roll 28 that slides along the bar 23 during the following steps made by the conveyor 1. After the grippers 27 of the manipulator 25 have been lifted (process step P₈), the manipulator 25 makes process steps P₉-P₁ along the conveyor 1 through the guide rails 19 via the platform 20 towards the die 10 with the punch 11 that move from the oven. The grippers 27 move downwards to the respective die 11 via the mechanism 26 of the manipulator 25. The gripped punch 11 is lifted upwards and transported to the opening of the oven; then, it is put downwards and couples with another filled die 10. The conveyor 1 switches on and moves the die 10 covered by that punch 11 towards the baking area; in the final part of the baking area, the die 10 with the baked product and covered by the punch 11 moves out of the oven. The process with the process steps Pᵢ described above is repeated. During the movements of the manipulator 26 and its structural components at the process steps P₁-P₆, P₈ and P₉-P₁, the conveyor 1 chain is stationary; only at the process step P₇, when the manipulator 25 is stationary, the conveyor 1 moves one step. As the dies 10 are transported out of the oven and opened one by one with the manipulator 25, the conveyor 1 transports them stepwise to the finished product unloader 4. As each cart with the die 10 mounted on its base 31 reaches the moving chain of the drive wheel of the conveyor 1, it is upturned. When it hits the limiter on the finished product unloader 4, which is designed as a console installed on the frame 2, each die 10 is shaken and the finished product is unloaded from the molds 9. When the conveyor 1 chain goes round the drive wheel, each overtipped cart with the die 10 on attached with its frontal axle 32 to the conveyor 1 chain is transported back to the conveyor. As it moves its step, the conveyor 1 chain transports the sequentially unloaded dies 10 back to the dough dispenser 3; the conveyor 1 stops, and the molds 9 on two adjacent dies 10 underneath the dispenser 3 are filled in again. As the conveyor 1 moves one step, next die 10 with its molds 9 on filled in with the dough is transported from the dispenser on the wheeled cart. Thus, the movement cycle of the dispenser 3, conveyor 1, and manipulator 25 is repeated.

The control unit 5 of the pastry-making machine has the following operating principle. The electronic control unit puts into movent and stops carts with the dies 10 on the conveyor 1. The carts with the dies 10 mounted on the base 31 are tipped over via the computer-programmed shaking of the dies as they hit the limiter of the unloader 4 designed as a console installed on the frame 2. The positioning and movement of the punches 11 are controlled by the contact-free sensors and are operated by the manipulator 25. The heating unit 12 of the dies 10 and the heating units 13 of the punches 11 are switched on and off following the commands from the control unit 5. The control unit 5 also sends commands for moving the carriage of the dispenser 3 and positioning it relative to the dies 10 as they are loaded.

If the oven heating unit 12 is equipped with the two-circuit cooling system 15 with the tubes 15a, 15b coiled similar to the induction element 16, then the unit 12 is protected from overheating via the cooling liquid transported through the tubes of 15a and 15b circuits, i.e., above and underneath the wired coil 16.

If the induction element 16 of the heating unit 12 is designed as a metal tube, then the liquid protecting the unit 12 from overheating is transported through the internal surface of said metal tube.

If the kinematic pairs of the rolls 7 in the dispenser 3 are equipped with independent drives 35, then the pastry making machine operates similarly to the embodiment in the general case. The distinction is that the amount of the discharged dough is proportional to the rotation angle of the respective drive 35. The rotation angle of the drive 35 is monitored by a respective sensor. Each rotation angle of the rolls 7 of the dispenser 3 corresponds to a specific number of sensor impulses monitored by the computer. Thus, the dosage of the dough that fills the mold 9 in depends on the number of impulses preset by the operator on the panel of the control unit 5.

If the specific embodiment has its guide rails 34 located on the support frame 2 for moving the carriage with the dispenser 3, then the difference from the general design is in the sequence of configuring and launching the dispenser 3. First, the oven is heated, then the control unit 5 gives the command to start forming the dough pieces in the dispenser 3 for further discharging them into the molds 9 on the dies 10. The dispenser installed on the support frame 2 is provided with an additional degree of freedom, making it possible to regulate the height of the dough and improve its positioning relative to the molds 9 on the dies 10 while also increasing the motion speed of the dispenser 3.

In case the specific embodiment has every die 10 installed on the cart base 31 with Γ-shaped bent edges in the front and in the back and the wheeled axle 32 positioned underneath the bent frontal part, induction currencies have the maximum effect on the dies 10. In case the cart bases 31 have Γ-shaped bent edges in the front and in the back, the dies 10 are located below the wheeled axle 32, as close to the inductor 12 as possible. Hence, the impact of induction currencies on the axle 32 itself (idler heating) is reduced. When the carts move back after unloading the dies 10, the dies get partially cleaned and the fat build-up is partially scraped off.

If the specific embodiment is equipped with a finished product turner 36 and an excess remover 37, it is functioning similarly to its general design. However, to prevent the product baked in the molds 9 from sticking to the punches 11, the dies 10 covered by the punches 11 get partially opened in turn from their opposite sides (Fig. 17). This reduces the fat adhesion on every die 10, while the baked products in the molds 9 remain intact. After that, the manipulator 25 consequently removes the punches 11 from all dies 10 as they are transported out of the oven. Having their punches 11 taken off, the dies 10 move towards the excess remover 37. By calibrating every baked product, e.g., with a profiling tool (cutter) with preset geometry, excesses are removed from the items. The movement of the cutter is regulated so that when it moves downwards to the die 10 containing the baked products; its cutting edge does not contact the die 10. After removing the excesses, the cutter stops directly in front of the die 10. Then, every die 10 moves towards the unloader 4. As the die 10 hits the limiter of the uploader 4, it is shaken, and the products drop out of the die.

The claimed machine can be assembled from fabricated parts, units, and nodes using the conventional materials, fixtures, and technologies. For making the invented machine, commonly applicable construction nodes, elements, and materials can be used, including hydraulic elements, rubber items, and fixture elements. For instance, heating elements of the punches can be made of aluminum plates with contacts soldered to them. Flexible heat-resistant wires can be used for powering the heaters. The temperature of heating the baking surfaces can be adjusted with voltage regulators operating within the 0-100% range. The pastry making machine can also be equipped with a computer-aided control unit.

## Claims

1. A pastry-making machine comprising
a transporter (1) installed on a support frame (2) and made in the form of a chain conveyor with product molds (9) positioned in longitudinal rows on dies (10),
a dough dispenser (3) positioned at the beginning of the conveyor (1) and capable of reciprocate movement,
punches (11) designed according to the rows of molds (9) on the dies (10),
an open conveyor oven for baking,
a finished product unloader (4), and
a control unit (5) connected to the dispenser (3) and the conveyor drive (33) with sensors;
a dispenser hopper (6) connected to a dosing head (8) case;
a blower consists of rolls (7) forming at least one kinematic pair, with their surfaces profiled with dividing cells distanced from one another, forming longitudinal and transversal rows, according to which the rows of dividing chambers are located on the dosing head (8), joined with channels discharging the dough;
the dies (10) installed on the conveyor (1) and the punches (11) installed in the open oven and capable of vertical movement for coupling/decoupling with/from the dies (10) are equipped with heating units (12, 13) located above and underneath the conveyor (1), respectively;
the heating units (12, 13) are connected to a control unit (5);
every die (10) is installed on the integral base (31) of a wheeled cart;
the cart is connected to the chain conveyor (1) with end parts of the front axle (32) for tipping over and unloading the finished product transported from the oven;
**characterized in that**
the heating unit (12) under the conveyor (1) is stretched along the oven installed on the brackets and equipped with a dielectrically-insulated (14) induction element (16) designed as a coil inside the heating unit (12), with horizontally stretched turns;
the heating unit (12) is also equipped with a water-cooling system (15);
Π-shaped stands are installed in the oven zone above the conveyor (1), their vertical elements (17) are located on the sides of the conveyor support frame (2), while guide rails (19) with a platform (20) are located on crossbars (18) of said Π-shaped stands, and a load-bearing beam (23) along the conveyor (1) and a current-carrying profile (24) are located underneath;
the platform (20) is capable of reciprocal movement via a toothed-belt transmission (21) installed on the external side of one of the guide rails (19) and has a manipulator (25) equipped with a lifting mechanism (26) and with magnetic or mechanical punch grippers (27);
each punch (11) is equipped with a pressure roll (28) installed on a bracket (29) to rest on the load-bearing beam (23) and with a current-collecting spring contact (30) for connecting the heating unit (13) to the current-carrying profile (24);
the automated control unit (5) is aligned with the manipulator (25) motion cycle.

2. The machine of claim 1, **characterized in that** in the heating unit (12) of the oven, the induction element (16) is equipped with the cooling system (15) consisting of upper and lower circuits (15a, 15b); in both circuits (15a), (15b), the cooling tubes are put in coils similar to the induction element (16).

3. The machine of claim 1, **characterized in that** in the heating unit (12) of the oven, the induction element (16) is made in the form of a metal tube forming the circuit of the induction element cooling system (15) in the inner space.

4. The machine of claim 1, **characterized in that** the dispenser (3) is mounted on the conveyor support frame (2); the support frame (2) is equipped with guide rails (34) for moving a cart with the dispenser (3).

5. The machine of claim 1, **characterized in that** each kinematic pair of the blower rolls (7) in the dispenser (3) is equipped with an independent drive (35).

6. The machine of claim 1, **characterized in that** every die (10) is mounted on the base (31) of a cart having L-shaped bent edges in the front and in the back; the wheeled axle (32) connecting the cart to the chain conveyor (1) is positioned underneath the bent part of the front edge of the base (31).

7. The machine of claim 1, **characterized in that** a finished product turner (36) and an excess remover (37) are positioned in front of an unloader (4).

8. A pastry-making machine comprising
a transporter (1) installed on a support frame (2) and designed as a chain conveyor with product molds (9) positioned in longitudinal rows on dies (10),
a dough dispenser (3) positioned at the beginning of the conveyor (1) and capable of reciprocal movement,
punches (11) designed according to the rows of molds (9) on the dies (10),
an open conveyor oven for baking,
a finished product unloader (4), and
a control unit (5) connected to the dispenser (3) and a conveyor drive (33) with sensors;
a hopper (6) of the dispenser (3) is connected to a dosing head (8) case;
a blower consists of rolls (7) forming at least one kinematic pair, with their surfaces profiled with dividing cells distanced from one another, forming longitudinal and transversal rows, according to which the rows of dividing chambers are located on the dosing head (8), joined with the channels discharging the dough;
the dies (10) installed on the conveyor (1) and the punches (11) installed in the open oven and capable of vertical movement for coupling/decoupling with/from the dies (10) are equipped with heating units (12, 13) located above and underneath the conveyor (1), respectively;
the heating units (12, 13) are connected to the control unit (5); each die (10) is installed on the integral base (31) of a wheeled cart;
the cart is connected to the chain conveyor (1) with the end parts of the front axle (32) for tipping over and unloading the finished product transported from the oven; **characterized in that**
the heating units (12, 13) are stretched along the entire oven, with one unit installed on the brackets underneath the conveyor (1) and the other above the conveyor (1);
within every unit (12, 13), there is an induction element (16) in the form of a coil with horizontally stretched turns;
the induction element (16) is dielectrically-insulated (14) and equipped with a water cooling system (15);
Π-shaped stands are installed in the oven zone above the conveyor (1), their vertical elements (17) are located on the sides of the conveyor support frame (2), while guide rails (19) with a platform (20) are installed on crossbars (18) of the Π-shaped stands;
load-bearing beams (23) are installed underneath the crossbars (18) of the Π-shaped stands along the conveyor (1); the inductive heating unit (13) is positioned between the load-bearing beams (23);
the platform (20) is capable of reciprocal movement along the guide rails (19) equipped, on the outer sides, with flexible pipes (21) of the toothed-belt transmission and a drive (22);
the manipulator (25) equipped with the lifting mechanism (26) and magnetic or mechanical punch grippers (27) is attached to the platform (20);
every punch (11) is equipped with pressure roll (28) installed on the brackets (29) attached to the load-bearing beams (23);
the automatic control unit (5) is aligned with the cycle of manipulator (25) movements.

9. The machine of claim 8, **characterized in that** in any heating unit (12, 13) of the oven, the induction element (16) is equipped with the cooling-system (15) consisting of upper and lower circuits (15a, 15b); in both circuits (15a), (15b), the cooling tubes are put in coils similar to the induction element (16).

10. The machine of claim 8, **characterized in that** in the heating unit (12, 13) of the oven, the induction element (16) is made in the form of a metal tube forming the circuit of the induction element cooling system (15) in the inner space.

11. The machine of claim 8, **characterized in that** the dispenser (3) is mounted on the conveyor support frame (2); the support frame (2) is equipped with guide rails (34) for moving a cart with the dispenser (3).

12. The machine of claim 8, **characterized in that** each kinematic pair of the blower rolls (7) in the dispenser (3) is equipped with an independent drive (35).

13. The machine of claim 8, **characterized in that** every die (10) is mounted on the base (31) of a cart having L-shaped bent edges in the front and in the back;
the wheeled axle (32) connecting the cart to the chain conveyor (1) is positioned underneath the bent part of the front edge of the base (31).

14. The machine of claim 8, **characterized in that** a finished product turner (36) and an excess remover (37) are positioned in front of the unloader (4).

## Patentansprüche

1. Eine Maschine zur Herstellung von Backwaren, umfassend
einen auf einem Tragrahmen (2) installierten Transporter (1) in Form eines Kettenförderers mit Produktformen (9), die in Längsreihen auf Matrizen (10) angeordnet sind,
einen Teigspender (3), der am Anfang des Förderers (1) positioniert ist und eine Pendelbewegung ausführen kann,
Stempel (11), die entsprechend den Reihen der Formen (9) auf den Matrizen (10) ausgebildet sind,
einen offenen Förderofen zum Backen,
einen Entlader (4) für das fertige Produkt und
eine Steuereinheit (5), die mit dem Spender (3) und dem Förderantrieb (33) über Sensoren verbunden ist;
einen mit einem Dosierkopfgehäuse (8) verbundenen Dosiertrichter (6);
wobei ein Gebläse aus Walzen (7) besteht, die mindestens ein kinematisches Paar bilden, deren Oberflächen mit voneinander beabstandeten Trennzellen profiliert sind, die Längs- und Querreihen bilden, entsprechend denen die Reihen von Trennkammern auf dem Dosierkopf (8) angeordnet sind, verbunden mit Kanälen, die den Teig ausleiten;
die auf dem Förderer (1) installierten Matrizen (10) und die im offenen Ofen installierten Stempel (11), die zur Kopplung/Entkopplung mit/von den Matrizen (10) vertikal bewegbar sind, mit Heizeinheiten (12, 13) ausgestattet sind, die jeweils oberhalb und unterhalb des Förderers (1) angeordnet sind;
die Heizeinheiten (12, 13) mit einer Steuereinheit (5) verbunden sind;
jede Matrize (10) auf dem integrierten Sockel (31) eines Rollwagens installiert ist;
der Wagen mit dem Kettenförderer (1) über Endteile der Vorderachse (32) verbunden ist, um das aus dem Ofen transportierte Fertigprodukt zu kippen und zu entladen;
**dadurch gekennzeichnet, dass**
die Heizeinheit (12) unter dem Förderer (1) entlang des auf den Halterungen installierten Ofens gestreckt und mit einem dielektrisch isolierten (14) Induktionselement (16) ausgestattet ist, das als Spule innerhalb der Heizeinheit (12) mit horizontal gestreckten Windungen ausgebildet ist;
die Heizeinheit (12) außerdem mit einem Wasserkühlsystem (15) ausgestattet ist;
U-förmige Ständer in der Ofenzone über dem Förderer (1) installiert sind, ihre vertikalen Elemente (17) befinden sich an den Seiten des Förderband-Tragrahmens (2), während Führungsschienen (19) mit einer Plattform (20) auf Querstreben (18) der genannten U-förmigen Ständer angebracht sind und sich darunter ein tragender Balken (23) entlang des Förderbandes (1) und ein stromführendes Profil (24) befinden;
die Plattform ist (20) pendelartig über einen Zahnriemenantrieb (21), der an der Außenseite einer der Führungsschienen (19) angebracht ist, bewegbar ausgeführt und über einen Manipulator (25), der mit einem Hebemechanismus (26) und mit magnetischen oder mechanischen Stanzgreifern (27) ausgestattet ist, verfügt;
jeder Stempel (11) mit einer Druckwalze (28) ausgestattet ist, die auf einer Halterung (29) angebracht ist, um auf dem Lastträger (23) aufzuliegen, sowie mit einem stromabnehmenden Federkontakt (30) zum Verbinden der Heizeinheit (13) mit dem stromführenden Profil (24);
die automatisierte Steuereinheit (5) ist auf den Bewegungszyklus des Manipulators (25) abgestimmt.

2. Maschine nach Anspruch 1, **dadurch gekennzeichnet, dass** in der Heizeinheit (12) des Ofens das Induktionselement (16) mit dem Kühlsystem (15) ausgestattet ist, das aus einem oberen und einem unteren Kreislauf (15a, 15b) besteht; in beiden Kreisläufen (15a), (15b) sind die Kühlrohre ähnlich dem Induktionselement (16) in Spulen angeordnet.

3. Maschine nach Anspruch 1, **dadurch gekennzeichnet, dass** in der Heizeinheit (12) des Ofens das Induktionselement (16) in Form eines Metallrohrs ausgebildet ist, das den Kreislauf des Kühlsystems (15) des Induktionselements im Innenraum bildet.

4. Maschine nach Anspruch 1, **dadurch gekennzeichnet, dass** der Spender (3) auf dem Förderträgerrahmen (2) montiert ist; der Trägerrahmen (2) ist mit Führungsschienen (34) zum Bewegen eines Wagens mit dem Spender (3) ausgestattet.

5. Maschine nach Anspruch 1, **dadurch gekennzeichnet, dass** jedes kinematische Paar der Gebläsewalzen (7) im Spender (3) mit einem unabhängigen Antrieb (35) ausgestattet ist.

6. Maschine nach Anspruch 1, **dadurch gekennzeichnet, dass** jede Matrize (10) auf der Basis (31) eines Wagens montiert ist, der vorne und hinten L-förmig gebogene Kanten aufweist; die Radachse (32), die den Wagen mit dem Kettenförderer (1) verbindet, ist unterhalb des gebogenen Teils der Vorderkante der Basis (31) positioniert.

7. Maschine nach Anspruch 1, **dadurch gekennzeichnet, dass** ein Fertigproduktwender (36) und ein Überschussentferner (37) vor einem Entlader (4) positioniert sind.

8. Eine Maschine zur Herstellung von Backwaren, umfassend
einen auf einem Tragrahmen (2) installierten Transporter (1), der als Kettenförderer mit Produktformen (9) ausgebildet ist, die in Längsreihen auf Matrizen (10) angeordnet sind,
einen Teigspender (3), der am Anfang des Förderers (1) positioniert ist und eine Pendelbewegung ausführen kann,
Stempel (11), die entsprechend den Reihen von Formen (9) auf den Matrizen (10) ausgebildet sind,
einen offenen Förderofen zum Backen,
einen Entlader (4) für fertige Produkte und
eine mit dem Spender (3) verbundene Steuereinheit (5) und einen Förderantrieb (33) mit Sensoren;
einen mit einem Dosierkopfgehäuse (8) verbundenen Trichter (6) des Spenders (3);
wobei ein Gebläse aus Walzen (7) besteht, die mindestens ein kinematisches Paar bilden, deren Oberflächen mit voneinander beabstandeten Trennzellen profiliert sind, die Längs- und Querreihen bilden, entsprechend denen die Reihen der Trennkammern auf dem Dosierkopf (8) angeordnet sind, verbunden mit den Kanälen, die den Teig ausleiten;
die auf dem Förderer (1) installierten Matrizen (10) und die im offenen Ofen installierten Stempel (11), die zur Kopplung/Entkopplung mit/von den Matrizen (10) vertikal bewegbar sind, mit Heizeinheiten (12, 13) ausgestattet sind, die jeweils oberhalb und unterhalb des Förderers (1) angeordnet sind;
die Heizeinheiten (12, 13) mit der Steuereinheit (5) verbunden sind; jede Form (10) ist auf dem integrierten Sockel (31) eines Rollwagens installiert;
der Wagen mit den Endteilen der Vorderachse (32) mit dem Kettenförderer (1) verbunden ist, um das aus dem Ofen transportierte Fertigprodukt zu kippen und zu entladen;
**dadurch gekennzeichnet, dass**
die Heizeinheiten (12, 13) über die gesamte Länge des Ofens verteilt sind, wobei eine Einheit an den Halterungen unterhalb des Förderers (1) und die andere oberhalb des Förderers (1) installiert ist;
innerhalb jeder Einheit (12, 13) ein Induktionselement (16) in Form einer Spule mit horizontal gestreckten Windungen vorhanden ist;
das Induktionselement (16) dielektrisch isoliert (14) und mit einem Wasserkühlsystem (15) ausgestattet ist;
U-förmige Ständer in der Ofenzone über dem Förderband (1) installiert sind, ihre vertikalen Elemente (17) sind an den Seiten des Förderband-Tragrahmens (2) angeordnet, während Führungsschienen (19) mit einer Plattform (20) auf Querstreben (18) der U-förmigen Ständer installiert sind;
Lasttragende Träger (23) unterhalb der Querstreben (18) der U-förmigen Ständer entlang des Förderers (1) installiert sind; die Induktionsheizungseinheit (13) ist zwischen den Lastträgern (23) positioniert;
die Plattform (20) ist pendelartig bewegbar entlang der Führungsschienen (19) ausgeführt, die an den Außenseiten mit flexiblen Rohren (21) des Zahnriementriebs und einem Antrieb (22) ausgestattet sind;
der Manipulator (25), der mit dem Hebemechanismus (26) und magnetischen oder mechanischen Stanzgreifern (27) ausgestattet ist, ist an der Plattform (20) befestigt;
jeder Stempel (11) ist mit einer Druckwalze (28) ausgestattet, die an den an den Tragbalken (23) befestigten Halterungen (29) angebracht ist;
die automatische Steuereinheit (5) ist auf den Bewegungszyklus des Manipulators (25) abgestimmt.

9. Maschine nach Anspruch 8, **dadurch gekennzeichnet, dass** in jeder Heizeinheit (12, 13) des Ofens das Induktionselement (16) mit einem Kühlsystem (15) ausgestattet ist, das aus einem oberen und einem unteren Kreislauf (15a, 15b) besteht; in beiden Kreisläufen (15a), (15b) sind die Kühlrohre in Spulen angeordnet, die dem Induktionselement (16) ähneln.

10. Maschine nach Anspruch 8, **dadurch gekennzeichnet, dass** in der Heizeinheit (12, 13) des Ofens das Induktionselement (16) in Form eines Metallrohrs ausgebildet ist, das den Kreislauf des Kühlsystems (15) des Induktionselements im Innenraum bildet.

11. Maschine nach Anspruch 8, **dadurch gekennzeichnet, dass** der Spender (3) auf dem Förderträgerrahmen (2) montiert ist; der Trägerrahmen (2) mit Führungsschienen (34) zum Bewegen eines Wagens mit dem Spender (3) ausgestattet ist.

12. Maschine nach Anspruch 8, **dadurch gekennzeichnet, dass** jedes kinematische Paar der Gebläsewalzen (7) im Spender (3) mit einem unabhängigen Antrieb (35) ausgestattet ist.

13. Maschine nach Anspruch 8, **dadurch gekennzeichnet, dass** jede Matrize (10) auf der Basis (31) eines Wagens montiert ist, der vorne und hinten L-förmig gebogene Kanten aufweist;
die Radachse (32), die den Wagen mit dem Kettenförderer (1) verbindet, unterhalb des gebogenen Teils der Vorderkante der Basis (31) positioniert ist.

14. Maschine nach Anspruch 8, **dadurch gekennzeichnet, dass** ein Fertigproduktwender (36) und ein Überschussentferner (37) vor dem Entlader (4) positioniert sind.

## Revendications

1. Machine de confection de pâtisserie comprenant :
un dispositif de transport (1) installé sur un cadre de support (2) et prenant la forme d'un convoyeur à chaîne avec des moules à produit (9) positionnés en rangées longitudinales sur des matrices (10),
un distributeur de pâte (3) positionné au début du convoyeur (1) et pouvant effectuer un mouvement de va-et-vient,
des poinçons (11) correspondant aux rangées de moules (9) sur les matrices (10),
un four de convoyeur ouvert pour la cuisson,
un dispositif de déchargement de produit fini (4), et
une unité de commande (5) connectée au distributeur (3) et à l'entraînement de convoyeur (33) par l'intermédiaire de capteurs ;
une trémie de distributeur (6) reliée à un carter de tête de dosage (8) ;
une soufflante est constituée de rouleaux (7) formant au moins une paire cinématique, leurs surfaces étant profilées par des alvéoles de portionnement situées à distance les unes des autres, formant des rangées longitudinales et transversales suivant lesquelles les rangées de cavités de portionnement sont disposées sur la tête de dosage (8), reliées à des canaux de déchargement de pâte ;
les matrices (10) installées sur le convoyeur (1) et les poinçons (11) installés dans le four ouvert et pouvant effectuer un mouvement vertical de couplage avec les matrices (10) / découplage d'avec les matrices (10) sont équipés d'unités de chauffage (12, 13) situées au-dessus et au-dessous du convoyeur (1), respectivement ; les unités de chauffage (12, 13) sont connectées à une unité de commande (5) ;
chaque matrice (10) est installée sur le fond (31) d'une seule pièce d'un chariot muni de roues ;
le chariot est relié au convoyeur à chaîne (1) par des parties d'extrémité de l'essieu antérieur (32) pour permettre son basculement et le déchargement du produit fini transporté depuis le four ;
**caractérisée en ce que**
l'unité de chauffage (12) sous le convoyeur (1) s'étend le long du four, est installée sur les supports et est équipée d'un élément d'induction (16) à isolation diélectrique (14) conçu en tant qu'enroulement à l'intérieur de l'unité de chauffage (12), avec des spires qui s'étendent horizontalement ;
l'unité de chauffage (12) est également équipée d'un système de refroidissement à l'eau (15) ;
des montants en forme de Π sont installés dans la zone de four au-dessus du convoyeur (1), leurs éléments verticaux (17) sont situés sur les côtés du cadre de support (2) du convoyeur, tandis que des rails de guidage (19) présentant une plateforme (20) sont situés sur des traverses (18) desdits montants en forme de Π, et une poutre porteuse (23) dans le sens longitudinal du convoyeur (1) ainsi qu'un profil conducteur (24) sont situés au-dessous ;
la plateforme (20) peut effectuer un mouvement de va-et-vient par le biais d'une transmission à courroie crantée (21) installée sur le côté extérieur de l'un des rails de guidage (19) et comprend un manipulateur (25) équipé d'un mécanisme de levage (26) et de pinces pour poinçon (27) magnétiques ou mécaniques ;
chaque poinçon (11) est équipé d'un rouleau de pression (28) installé sur un support (29) pour appuyer sur la poutre porteuse (23) et d'un contact élastique collecteur de courant (30) pour connecter l'unité de chauffage (13) au profil conducteur (24) ;
l'unité de commande automatisée (5) est coordonnée avec le cycle de mouvement du manipulateur (25).

2. Machine selon la revendication 1, **caractérisée en ce que**, dans l'unité de chauffage (12) du four, l'élément d'induction (16) est équipé du système de refroidissement (15) consistant en des circuits supérieur et inférieur (15a, 15b) ; dans les deux circuits (15a), (15b), les tubes de refroidissement sont agencés en enroulements similaires à l'élément d'induction (16).

3. Machine selon la revendication 1, **caractérisée en ce que**, dans l'unité de chauffage (12) du four, l'élément d'induction (16) prend la forme d'un tube métallique formant le circuit du système de refroidissement (15) de l'élément d'induction dans l'espace intérieur.

4. Machine selon la revendication 1, **caractérisée en ce que** le distributeur (3) est monté sur le cadre de support (2) du convoyeur ; le cadre de support (2) est équipé de rails de guidage (34) permettant le déplacement d'un chariot avec le distributeur (3).

5. Machine selon la revendication 1, **caractérisée en ce que** chaque paire cinématique de rouleaux de soufflante (7) du distributeur (3) est équipée d'un entraînement (35) indépendant.

6. Machine selon la revendication 1, **caractérisée en ce que** chaque matrice (10) est montée sur le fond (31) d'un chariot présentant des bords pliés en L à l'avant et à l'arrière ; l'essieu à roues (32) reliant le chariot au convoyeur à chaîne (1) est positionné au-dessous de la partie pliée du bord antérieur du fond (31).

7. Machine selon la revendication 1, **caractérisée en ce qu'**un dispositif de retournement de produit fini (36) et un dispositif d'élimination d'excédents (37) sont positionnés en amont d'un dispositif de déchargement (4).

8. Machine de pâtisserie industrielle comprenant
un dispositif de transport (1) installé sur un cadre de support (2) et conçu en tant que convoyeur à chaîne avec des moules à produit (9) positionnés en rangées longitudinales sur des matrices (10),
un distributeur de pâte (3) positionné au début du convoyeur (1) et pouvant effectuer un mouvement de va-et-vient,
des poinçons (11) correspondant aux rangées de moules (9) sur les matrices (10),
un four de convoyeur ouvert pour la cuisson,
un dispositif de déchargement de produit fini (4), et
une unité de commande (5) connectée au distributeur (3) et à un entraînement de convoyeur (33) par l'intermédiaire de capteurs ;
une trémie (6) du distributeur (3) est reliée à un carter de tête de dosage (8) ;
une soufflante est constituée de rouleaux (7) formant au moins une paire cinématique, leurs surfaces étant profilées par des alvéoles de portionnement situées à distance les unes des autres, formant des rangées longitudinales et transversales suivant lesquelles les rangées de cavités de portionnement sont disposées sur la tête de dosage (8), reliées aux canaux de déchargement de la pâte ;
les matrices (10) installées sur le convoyeur (1) et les poinçons (11) installés dans le four ouvert et pouvant effectuer un mouvement vertical de couplage avec les matrices (10) / découplage d'avec les matrices (10) sont équipés d'unités de chauffage (12, 13) situées au-dessus et au-dessous du convoyeur (1), respectivement ; les unités de chauffage (12, 13) sont connectées à l'unité de commande (5) ; chaque matrice (10) est installée sur le fond (31) d'une seule pièce d'un chariot muni de roues ; le chariot est relié au convoyeur à chaîne (1) par les parties d'extrémité de l'essieu antérieur (32) pour permettre son basculement et le déchargement du produit fini transporté depuis le four ;
**caractérisée en ce que**
les unités de chauffage (12, 13) s'étendent tout le long du four, une unité étant installée sur les supports au-dessous du convoyeur (1) et l'autre au-dessus du convoyeur (1) ;
dans chaque unité (12, 13) se trouve un élément d'induction (16) se présentant sous la forme d'un enroulement à spires étendues horizontalement ;
l'élément d'induction (16) est isolé par diélectrique (14) et est équipé d'un système de refroidissement à l'eau (15) ;
des montants en forme de Π sont installés dans la zone de four au-dessus du convoyeur (1), leurs éléments verticaux (17) sont situés sur les côtés du cadre de support (2) du convoyeur, tandis que des rails de guidage (19) présentant une plateforme (20) sont installés sur des traverses (18) des montants en Π ;
des poutres porteuses (23) sont installées sous les traverses (18) des montants en Π dans le sens longitudinal du convoyeur (1) ; l'unité de chauffage par induction (13) est positionnée entre les poutres porteuses (23) ;
la plateforme (20) peut effectuer un mouvement de va-et-vient le long des rails de guidage (19) équipés, sur les côtés extérieurs, de tuyaux flexibles (21) de la transmission à courroie crantée et d'un entraînement (22) ;
le manipulateur (25), équipé du mécanisme de levage (26) et de pinces pour poinçon (27) magnétiques ou mécaniques, est fixé sur la plateforme (20) ;
chaque poinçon (11) est équipé d'un rouleau de pression (28) installé sur les supports (29) fixés aux poutres porteuses (23) ;
l'unité de commande automatique (5) est coordonnée avec le cycle de mouvements du manipulateur (25).

9. Machine selon la revendication 8, **caractérisée en ce que**, dans toute unité de chauffage (12, 13) du four, l'élément d'induction (16) est équipé du système de refroidissement (15) consistant en des circuits supérieur et inférieur (15a, 15b) ; dans les deux circuits (15a), (15b), les tubes de refroidissement sont agencés en enroulements similaires à l'élément d'induction (16).

10. Machine selon la revendication 8, **caractérisée en ce que**, dans l'unité de chauffage (12, 13) du four, l'élément d'induction (16) prend la forme d'un tube métallique formant le circuit du système de refroidissement (15) de l'élément d'induction dans l'espace intérieur.

11. Machine selon la revendication 8, **caractérisée en ce que** le distributeur (3) est monté sur le cadre de support (2) de convoyeur ; le cadre de support (2) est équipé de rails de guidage (34) permettant le déplacement d'un chariot avec le distributeur (3).

12. Machine selon la revendication 8, **caractérisée en ce que** chaque paire cinématique des rouleaux de soufflante (7) du distributeur (3) est équipée d'un entraînement (35) indépendant.

13. Machine selon la revendication 8, **caractérisée en ce que** chaque matrice (10) est montée sur le fond (31) d'un chariot présentant des bords pliés en L à l'avant et à l'arrière ;
l'essieu à roues (32) reliant le chariot au convoyeur à chaîne (1) est positionné au-dessous de la partie pliée du bord antérieur du fond (31).

14. Machine selon la revendication 8, **caractérisée en ce qu'**un dispositif de retournement de produit fini (36) et un dispositif d'élimination d'excédents (37) sont positionnés en amont du dispositif de déchargement (4).
